# EUROPÄISCHE PATENTANMELDUNG

(11) **EP 3 148 055 A1**
(43) Veröffentlichungstag der Anmeldung: **29.03.2017**
(21) Anmeldenummer: 15187120.9
(22) Anmeldetag: 28.09.2015
(51) Int. Cl.: H02K 5/124

(54) **ELEKTRISCHE MASCHINE, LABYRINTHDICHTUNG FÜR EINE ELEKTRISCHE MASCHINE UND VERFAHREN ZUM ABDICHTEN EINER ELEKTRISCHEN MASCHINE**

(71) Anmelder: Siemens Aktiengesellschaft, 80333 München (DE)
(72) Erfinder: Huter, Eric, 97616 Bad Neustadt a.d. Saale (DE); Schmitt, Daniel, 97708 Bad Bocklet (DE); Vollmer, Rolf, 36129 Gersfeld (DE)

(57) **Zusammenfassung**

Die Erfindung betrifft eine elektrische Maschine (2) mit einem Gehäuse (6) das einen Stator (4) und einen Rotor (8) aufnimmt, wobei der Rotor (8) auf einer Rotorwelle (10) gelagert ist, die sich in einer Axialrichtung (A) erstreckt. Eine besonders gute Abdichtung des Gehäuses (6) wird gewährleistet durch eine Labyrinthdichtung (12) umfassend ein erstes Formelement (14a) und ein zweites Formelement (14b), die jeweils eine Anzahl von Lamellen (18) aufweisen, die ineinander greifen. Das erste Formelement (14a) ist an der Rotorwelle (10) und das zweite Formelement (14b) ist an einem feststehenden Gehäuseteil (16) befestigt, derart, dass die Labyrinthdichtung (12) in einer horizontalen Einbaulage liegt, wobei ein Dichtspalt (20) zwischen den Lamellen (18) zumindest teilweise in einer Radialrichtung (R) verläuft. Die Labyrinthdichtung (12) wird dabei durch ein generatives Fertigungsverfahren geformt.

## Beschreibung

Die Erfindung betrifft eine elektrische Maschine mit einem Gehäuse das einen Stator und einen Rotor aufnimmt, wobei der Rotor auf einer Rotorwelle gelagert ist, die sich in einer Axialrichtung erstreckt.

Die Erfindung betrifft weiterhin eine Labyrinthdichtung für eine solche elektrische Maschine.

Darüber hinaus betrifft die Erfindung ein Verfahren zum Abdichten einer elektrischen Maschine mit einem Gehäuse das einen Stator und einen Rotor aufnimmt, wobei der Rotor auf einer Rotorwelle gelagert ist, die sich in einer Axialrichtung erstreckt.

Im Allgemeinen beinhaltet eine elektrische Maschine, wie beispielsweise ein elektrischer Motor, einen Stator, einen Rotor, der auf einer Rotorwelle montiert ist, sowie ein Gehäuse mit Lagerungen für die Rotorwelle. Elektrische Maschinen sollen an der rotierenden Rotorwelle zum Gehäuse abgedichtet werden, so dass im Innenraum der elektrischen Maschine keine Flüssigkeit oder Staub eindringen kann. Dies wird beispielsweise über Radialwellendichtungen, auch als Radialwellendichtringe bezeichnet, erreicht.

In der DE 10 2013 210 617 Al ist eine elektrische Maschine beschrieben, die im Gehäuse verlaufende Kühlkanäle für ein Kühlmedium aufweist, die zu Lagerschilden, welche an den axialen Enden das Gehäuses angesetzt sind, hin offen sind. Das Gehäuse weist zudem an seinen axialen Enden jeweils eine im Bereich der Kühlkanäle um eine Rotationsachse umlaufende Ausnehmung auf, in der jeweils eine Dichtung, insbesondere ein O-Ring, angeordnet ist. Das jeweilige Lagerschild drückt axial auf die Dichtung und verformt diese, so dass die Dichtung in der Ausnehmung radial innen und radial außen an das Gehäuse angedrückt wird. Mittels der Dichtungen sind die Kühlkanäle sowohl gegenüber dem Rotor und dem Stator als auch gegenüber der Umgebung der elektrischen Maschine mediumdicht abgedichtet. Zudem sind der Rotor und der Stator gegenüber der Umgebung der elektrischen Maschine staub- und flüssigkeitsdicht abgedichtet.

Der Erfindung liegt die Aufgabe zugrunde bei einer elektrischen Maschine eine zuverlässige Abdichtung der Rotorwelle gegenüber dem Gehäuse, insbesondere in Axialrichtung, zu gewährleisten.

Die Aufgabe wird erfindungsgemäß durch eine elektrische Maschine mit einem Gehäuse das einen Stator und einen Rotor aufnimmt, wobei der Rotor auf einer Rotorwelle gelagert ist, die sich in einer Axialrichtung erstreckt, wobei zur Abdichtung des Gehäuses eine Labyrinthdichtung vorgesehen ist, umfassend ein erstes Formelement und ein zweites Formelement, die jeweils eine Anzahl von Lamellen aufweisen, die ineinander greifen, wobei das erste Formelement an der Rotorwelle befestigt ist und das zweite Formelement an einem feststehenden Gehäuseteil befestigt ist, derart, dass die Labyrinthdichtung in einer horizontalen Einbaulage liegt, wobei ein Dichtspalt zwischen den Lamellen zumindest teilweise in einer Radialrichtung verläuft.

Die Aufgabe wird weiterhin erfindungsgemäß gelöst durch eine Labyrinthdichtung für eine solche elektrische Maschine.

Die Aufgabe wird schließlich gelöst durch ein Verfahren zum Abdichten einer elektrischen Maschine mit einem Gehäuse das einen Stator und einen Rotor aufnimmt, wobei der Rotor auf einer Rotorwelle gelagert ist, die sich in einer Axialrichtung erstreckt, wobei
- eine Labyrinthdichtung umfassend ein erstes Formelement und ein zweites Formelement, die jeweils eine Anzahl von Lamellen aufweisen, die ineinander greifen, durch ein generatives Fertigungsverfahren geformt wird, und
- die Labyrinthdichtung in die elektrische Maschine eingebaut wird, indem das erste Formelement an der Rotorwelle befestigt wird und das zweite Formelement an ein feststehendes Gehäuseteil befestigt wird, derart, dass die Labyrinthdichtung in einer horizontalen Einbaulage angeordnet wird, wobei sich die Lamellen zumindest teilweise in Radialrichtung erstrecken.

Die in Bezug auf die elektrische Maschine nachstehend angeführten Vorteile und bevorzugten Ausgestaltungen lassen sich sinngemäß auf die Labyrinthdichtung und das Verfahren zum Abdichten einer elektrischen Maschine übertragen.

Die Erfindung basiert auf der Überlegung, durch ein generatives Fertigungsverfahren, auch als 3D-Druck bekannt, eine Labyrinthdichtung für den Einsatz in einer elektrischen Maschine herzustellen, wobei die Labyrinthdichtung für eine axiale Einbaulage geeignet ist und somit eine besonders gute Abdichtung in Axialrichtung der Rotorwelle gewährleistet.

Unter Labyrinthdichtung wird hierbei eine zweiteilige Wellendichtung verstanden, bei der die Dichtwirkung auf der Verlängerung des Dichtweges, hier als Dichtspalt bezeichnet, durch die wechselweise Anordnung der Lamellen der Formelemente auf der Rotorwelle und dem feststehenden Gehäuseteil beruht. Aufgrund des hohen Strömungswiderstandes in dem langen Dichtspalt kann nur eine geringe, tolerierbare Fluidmenge durch die Labyrinthdichtung austreten.

Ein generatives Herstellungsverfahren ermöglicht die Herstellung von komplexen Strukturen. Es lassen sich dabei in einem einzigen Herstellungsprozess einfach und kostengünstig ineinander liegende, nicht stoffschlüssig verbundene Formelemente mit unterschiedlichen Eigenschaften und mehreren Funktionen anfertigen.

Die Labyrinthdichtung ist zweiteilig aufgebaut und weist dabei zwei ringförmige Formelemente auf, die durch ihre Lamellen ineinander greifen. Pro Formelement sind insbesondere zwischen zwei und zehn Lamellen vorgesehen. Die Anzahl der Lamellen jedes Formelements ist an die Breite der Lamellen angepasst. Ziel ist es dabei, einen möglichst langen Dichtspalt zwischen den Formelementen zu schaffen, so dass eine gute Abdichtung gewährleistet ist. Die Breite der Lamellen, in Axialrichtung betrachtet, beträgt insbesondere von einigen hundert Mikrometer bis wenigen Zentimeter. Der Dichtspalt ist insbesondere einige Zentimeter, beispielsweise ca. 10 cm, lang.

Die zweiteilige Labyrinthdichtung zum Abdichten der Rotorwelle wird in einem einzigen Schritt hergestellt. Beide Formelemente sind somit vom Anfang an nicht voneinander trennbar, auch wenn sie nur locker ineinander liegen. Dies vereinfacht den Einbau der Labyrinthdichtung in die elektrische Maschine, da beide Formelemente in einem Arbeitsschritt zwischen der Rotorwelle und dem feststehenden Gehäuseteil, insbesondere einem Lagerschild, eingefügt werden. Dabei wird das erste Formelement dicht an die Rotorwelle angepresst und das zweite Formelement dicht an das feststehende Gehäuseteil angepresst. Durch die axiale Einbaulage der Labyrinthdichtung erstreckt sich der Dichtspalt, von der Rotorwelle aus betrachtet, bevorzugt größtenteils oder zumindest teilweise in Radialrichtung, wodurch der Weg einer in den Dichtspalt eindringenden Flüssigkeit oder Staub in Axialrichtung versperrt wird.

Im Hinblick auf eine Verbesserung der Dichteigenschaften der Labyrinthdichtung in Radialrichtung sind gemäß einer bevorzugten Ausführung die Lamellen in Axialrichtung etwa so lang wie in Radialrichtung. Dies bedeutet, dass bei einer Querschnittbetrachtung die Lamellen ungefähr so breit wie lang sind, d.h. sie haben einen quadratischen Querschnitt. Der Effekt hierbei ist, dass der Dichtspalt lange Abschnitte mit einem axialen Verlauf weist, welche sich positiv auf die Dichtwirkung ebenfalls in Radialrichtung auswirken. Vorzugsweise sind die Formelemente aus einem hydrophoben Werkstoff ausgebildet, wodurch ein Haften von Wasser oder wasserenthaltenden Flüssigkeit an der Oberfläche der Labyrinthdichtung im Dichtspalt vermieden wird.

Zweckdienlicher weise sind die Formelemente aus Kunststoff, Glas, Metall oder Keramik. Die beiden Formelemente der Labyrinthdichtung sind dabei insbesondere aus einem einzigen Werkstoff hergestellt, wodurch ihre Herstellung vereinfacht ist. Verschiedene Funktionalitäten der einzelnen Bereiche der Labyrinthdichtung werden dabei durch lokale Änderungen der Geometrie oder der Zusammensetzung des Materials erreicht.

Nach einer bevorzugten Variante weisen die Lamellen mindestens einen radial verlaufenden als auch mindestens einen axial verlaufenden Abschnitt auf. Dank des angewendeten progressiven Fertigungsverfahrens sind mehrere komplexe geometrische Formen der Lamellen leicht herstellbar, die Lamellen können somit einen L-, U-, schnecken- oder mäanderförmigen Verlauf aufweisen.

Bevorzugt weist die Labyrinthdichtung Kraftschlusselemente zum Herstellen einer kraftschlüssigen Abdichtung auf. Die Kraftschlusselemente sind insbesondere Radialwellendichtringe ausgestaltet, ggf. ergänzt durch Federflächen an den Lamellen. Die Lamellen beider Formelemente der Labyrinthdichtung berühren sich in der Regel nicht, jedoch kann durch die Kraftschlusselemente linienförmiger oder flächiger Kontakt zwischen den Lamellen hergestellt werden. Der kraftschlüssige Kontakt wird im Betrieb der elektrischen Maschine bei der Drehung der Rotorwelle insbesondere durch die auf die Kraftschlusselemente wirkende 2entrifugalkräfte, insbesondere im Bereich der Federflächen, aufgehoben, so dass die Labyrinthdichtung durch die Drehung nicht verschleißt. Sowohl die Kraftschlusselemente als auch die Federflächen sind aus dem Material der Labyrinthdichtung hergestellt. Die Federflächen sind dabei durch strukturelle Änderungen des Materials ausgebildet, z.B. durch Hohlräume, Wabenstrukturen oder das Material ist an dieser Stelle weicher.

Eine weitere Verbesserung der Dichtwirkung wird erreicht, indem die Labyrinthdichtung vorzugsweise ein Pumpenrad aufweist, welches am Eingang des Dichtspalts Unterdruck erzeugt, um in den Dichtspalt eingedrungene Flüssigkeit herauszusaugen.

Ein Ausführungsbeispiel der Erfindung wird anhand einer Zeichnung näher erläutert. Hierin zeigen schematisch und stark vereinfacht:
- FIG 1: den Aufbau einer elektrischen Maschine,
- FIG 2: in einer Querschnittdarstellung eine in einer elektrischen Maschine integrierte Labyrinthdichtung,
- FIG 3: in einer Querschnittdarstellung die Labyrinthdichtung gemäß FIG 2 mit Radialwellendichtringen, und
- FIG 4: in einer Querschnittdarstellung die Labyrinthdichtung gemäß FIG 3 ergänzt durch ein Pumpenrad.

In den verschiedenen Figuren haben gleiche Bezugszeichen die gleiche Bedeutung.

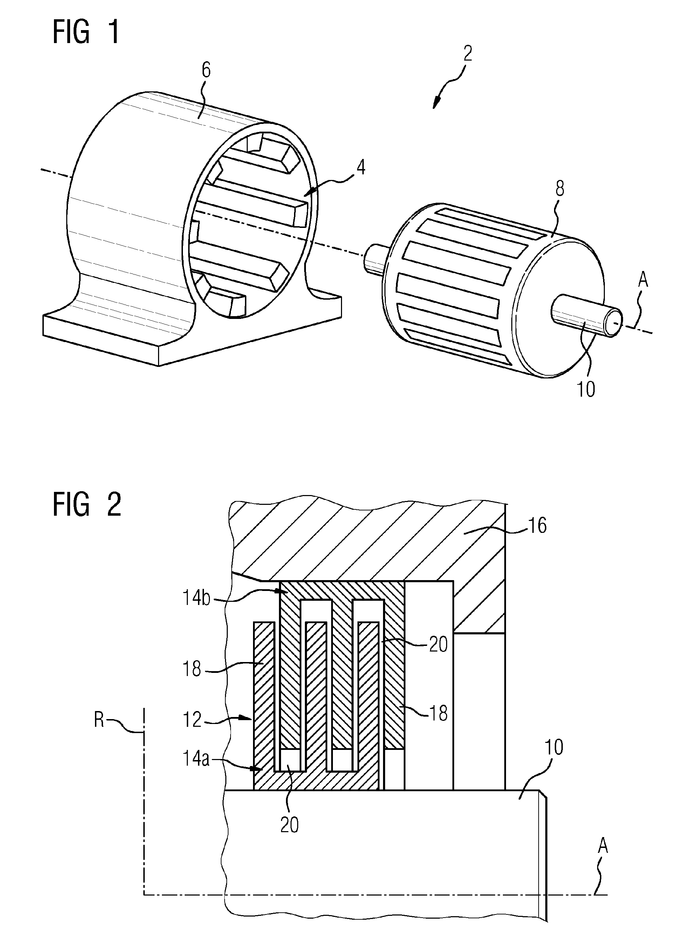

In FIG 1 ist der schematische Aufbau einer elektrischen Maschine 2, hier eines Motors, gezeigt. Der Motor 2 umfasst einen Stator 4, der in einem Gehäuse 6 untergebracht ist. Im zusammengebauten Zustand umschließt der Stator 4 einen Rotor 8, der auf einer Rotorwelle 10 montiert ist. Die Rotorwelle 10 erstreckt sich in einer Axialrichtung A.

Zur Abdichtung des Gehäuses 6 gegenüber der Rotorwelle 10 sind Labyrinthdichtungen 12 vorgesehen. Eine solche Labyrinthdichtung 12 ist in FIG 2 gezeigt. Die Labyrinthdichtung 12 umfasst ein erstes Formelement 14a und ein zweites Formelement 14b. Das erste Formelement 14a ist an der Rotorwelle 10 befestigt und das zweite Formelement 14b an einem feststehenden Gehäuseteil, hier an einem nicht näher gezeigten Lagerschild 16.

Jedes der Formelemente 14a, 14b weist mehrere Lamellen 18 auf, in FIG 2 jeweils drei Lamellen 18, die ineinander greifen. Im gezeigten Ausführungsbeispiel erfolgt kein Kontakt zwischen beiden Formelementen 14a, 14b, so dass zwischen den Lamellen 18 ein ununterbrochener Dichtspalt 20 ausgebildet ist. Durch die horizontale Einbaulage der Labyrinthdichtung 12 verläuft der Dichtspalt 20 größtenteils in einer Radialrichtung R, d.h. dass die Abschnitte des Dichtspalts 20, die in Radialrichtung R verlaufen, deutlich länger sind als die Abschnitte, die in Axialrichtung A verlaufen. Auf diese Weise wird eine besonders gute Abdichtung gegen Flüssigkeiten oder Staub in Axialrichtung A gewährleistet.

Die Formelemente 14a, 14b sind aus einem hydrophoben Werkstoff, z.B. aus einem Kunstsoff hergestellt. Die Labyrinthdichtung 12 mit ihren Formelementen 14a, 14b wurde dabei in einem einzigen Herstellungsschritt mittels eines progressiven Fertigungsverfahrens angefertigt. Anschließend wurde die Labyrinthdichtung 12 an ihrem Einsatzort zwischen der Rotorwelle 10 und dem Lagerschild 16 eingepresst.

Im gezeigten Ausführungsbeispiel gemäß FIG 2 sind die Lamellen 18 in Radialrichtung R viel länger als sie in Axialrichtung A breit sind, insbesondere beträgt ihre Länge in Radialrichtung R etwas das Fünffache als in Axialrichtung A. Es ist jedoch auch denkbar die Lamellen 18 in Axialrichtung A noch schmäler oder auch deutlich breiter auszugestalten. Unter anderem können die Lamellen 18 sogar so breit wie lang sein. Der Vorteil dieser Ausführung ist, dass der Dichtspalt 20 nicht überwiegend in Radialrichtung R, sondern zu gleicher Maßen in Radialrichtung R und Axialrichtung A verläuft, wodurch ein guter Dichtschutz auch in Radialrichtung R ermöglicht ist.

Die Anzahl der Lamellen 18 sowie die Breite und Länge der Lamellen 18 werden dabei an die technischen Anforderung für die Labyrinthdichtung 12 angepasst, wobei die baulichen Grenzen zwischen der Rotorwelle 10 und dem Gehäuse 6 berücksichtigt werden.

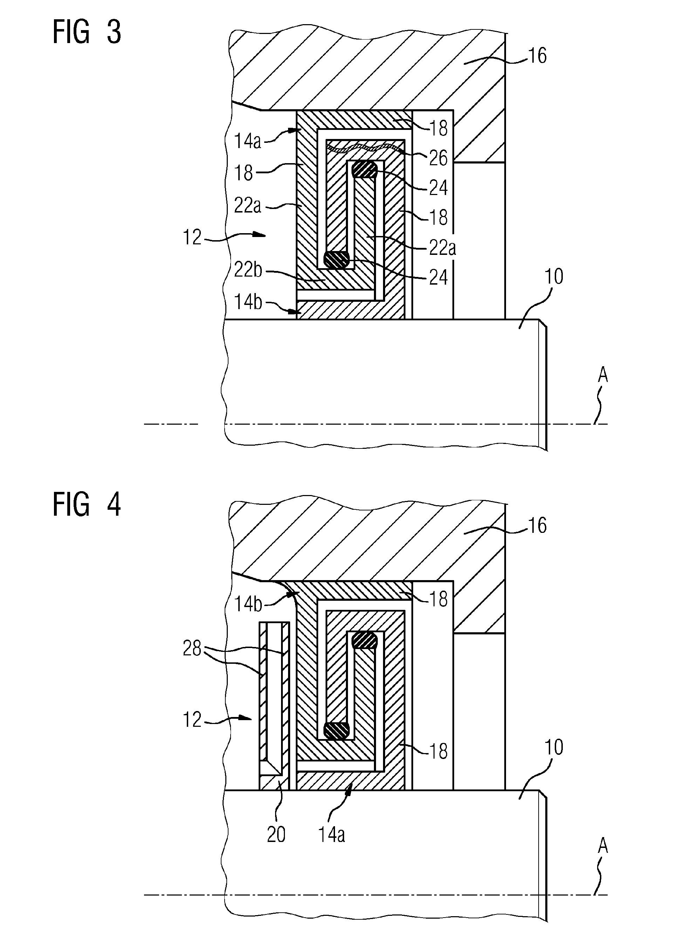

Beim Ausführungsbeispiel gemäß FIG 3 weisen die Lamellen 18 mindestens einen radial verlaufenden Abschnitt 22a als auch mindestens einen axial verlaufenden Abschnitt 22b auf, so dass die Lamellen 18 etwa schneckenförmig geformt sind. Jedes Formelement 24a, 24b umfasst jeweils eine Lamelle 18, jedoch weist diese zwei radial verlaufende Abschnitte 22a auf, so dass die Wirkung dieser Labyrinthdichtung 12 ähnlich ist wie eine, die zwei sich radial erstreckende Lamellen 18 umfasst. Der axial verlaufende Abschnitt 22b der Lamellen 18 erzielt dabei eine gute Dichtwirkung auch in Radialrichtung R.

Darüber hinaus sind in FIG 3 an den freien Enden der Lamellen 18 Kraftschlusselemente 24 nach Art von Radialwellendichtringen 24 vorgesehen, welche für einen kraftschlüssigen Kontakt zwischen beiden Formelementen 14a, 14b sorgen. Ergänzend zu den Kraftschlusselementen 24 sind im Material der Lamellen 18 Federflächen 26 ausgebildet, indem z.B. das Material an dieser Stelle weicher und somit elastischer ist. Mit Hilfe der Federflächen 26 werden bei der Rotation der Rotorwelle 10 die Kraftschlusselemente 24 radial weggedrückt, so dass der Kontakt zwischen den Kraftschlusselementen 24 gelöst wird.

Die Labyrinthdichtung 12 gemäß FIG 4 unterschiedet sich von der Labyrinthdichtung 12 aus FIG 3 lediglich dadurch, dass zusätzlich ein Pumpenrad 28 vorgesehen ist, welche von außen betrachtet vor der Labyrinthdichtung 12 angeordnet ist. Das Pumpenrad 28 erzeugt am Eingang des Dichtspalts 20 Unterdruck, um die Flüssigkeit herauszusaugen, die unter Umständen in den Dichtspalt 20 eingedrungen ist.

## Patentansprüche

1. Elektrische Maschine (2) mit einem Gehäuse (6) das einen Stator (4) und einen Rotor (8) aufnimmt, wobei der Rotor (8) auf einer Rotorwelle (10) gelagert ist, die sich in einer Axialrichtung (A) erstreckt,
**dadurch gekennzeichnet, dass** zur Abdichtung des Gehäuses (6) eine Labyrinthdichtung (12) vorgesehen ist, umfassend ein erstes Formelement (14a) und ein zweites Formelement (14b), die jeweils eine Anzahl von Lamellen (18) aufweisen, die ineinander greifen, wobei das erste Formelement (14a) an der Rotorwelle (10) befestigt ist und das zweite Formelement (14b) an einem feststehenden Gehäuseteil (16) befestigt ist, derart, dass die Labyrinthdichtung (12) in einer horizontalen Einbaulage liegt, wobei ein Dichtspalt (20) zwischen den Lamellen (18) zumindest teilweise in einer Radialrichtung (R) verläuft.

2. Elektrische Maschine (2) nach Anspruch 1,
wobei die Lamellen (18) in Axialrichtung (A) etwa so lang sind wie in Radialrichtung (R).

3. Elektrische Maschine (2) nach einem der vorhergehenden Ansprüche,
wobei die Labyrinthdichtung (12) aus einem hydrophoben Werkstoff ausgebildet ist.

4. Elektrische Maschine (2) nach einem der vorhergehenden Ansprüche,
wobei die Labyrinthdichtung (12) aus Kunstsoff, Glas, Metall oder Keramik ist.

5. Elektrische Maschine (2) nach einem der vorhergehenden Ansprüche,
wobei die Lamellen (18) mindestens einen radial verlaufenden Abschnitt (22a) als auch mindestens einen axial verlaufenden Abschnitt (22b) aufweisen.

6. Elektrische Maschine (2) nach einem der vorhergehenden Ansprüche,
wobei die Labyrinthdichtung (12) Kraftschlusselemente (24) zum Herstellen einer kraftschlüssigen Abdichtung zwischen den Lamellen (18) aufweist.

7. Elektrische Maschine (2) nach einem der vorhergehenden Ansprüche,
wobei am Eingang des Dichtspalts (20) ein Pumpenrad (26) vorgesehen ist.

8. Labyrinthdichtung (12) für eine elektrische Maschine (2) nach einem der vorhergehenden Ansprüche.

9. Verfahren zum Abdichten einer elektrischen Maschine (2) mit einem Gehäuse (6) das einen Stator (4) und einen Rotor (8) aufnimmt, wobei der Rotor (8) auf einer Rotorwelle (10) gelagert ist, die sich in einer Axialrichtung (A) erstreckt, **dadurch gekennzeichnet, dass**
- eine Labyrinthdichtung (12) umfassend ein erstes Formelement (14a) und ein zweites Formelement (14b), die jeweils eine Anzahl von Lamellen (18) aufweisen, die ineinander greifen, durch ein generatives Fertigungsverfahren geformt wird, und
- die Labyrinthdichtung (12) in die elektrische Maschine (2) eingebaut wird, indem das erste Formelement (14a) an der Rotorwelle (10) befestigt wird und das zweite Formelement (14b) an einem feststehenden Gehäuseteil (16) befestigt wird, derart, dass die Labyrinthdichtung (12) in einer horizontalen Einbaulage angeordnet wird, wobei ein Dichtspalt (20) zwischen den Lamellen (18) zumindest teilweise in einer Radialrichtung (R) verläuft.
